# EUROPEAN PATENT APPLICATION

(11) **EP 3 040 891 A1**
(43) Date of publication of application: **06.07.2016**
(21) Application number: 14307219.7
(22) Date of filing: 31.12.2014
(51) Int. Cl.: G06F 21/16, G06F 21/55

(54) **Method for providing information to determine a graph associated with a data item**

(71) Applicant: Thomson Licensing, 92130 Issy-les-Moulineaux (FR)
(72) Inventor: Neumann, Christophe, 3556 Cesson Sevigne (FR); Heen, Olivier, 35576 Cesson Sevigne (FR); Onno, Stephane, 35576 Cesson Sevigne (FR); Taft, Nina Anne, Los Altos, CA 94022 (US)
(74) Representative: Huchet, Anne

(57) **Abstract**

In one embodiment, it is proposed a method for providing information to determine a graph associated with a data item, said graph being representative of a history of said data item in a network, and said graph comprising a set of vertices and a set of edges, each vertex being associated with an electronic device (101) of said network, and each edge linked at least two vertices being representative of a dataflow between said at least two vertices. The method is executed by an electronic device (101) and is remarkable in that it comprises:
- verifying if an hash information derived from an obtained data item is comprised in a list of tracked data item (307) comprising a list of hashes, each hash being a hash of a first information related to a data item;
- in the case that said hash information derived from said obtained data item is comprised in said list of tracked data item (307), transmitting in said network said information to determine a graph comprising a hash of a second information related to said obtained data item, when said obtained data item is obtained by said electronic device (101), and/or transmitted to another electronic device (203) in said network and/or a derived data item from said obtained data item is generated.

## Description

### Technical Field

The disclosure relates to the tracking of data items such as computer files (as electronic documents, audio-video files, images files, etc.), and even of modified versions of these data items (such as a modified version of a computer file).

### Background

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Usually, when a data item (such as audio or video files, or text files, etc.) is transmitted by an electronic device to several others electronic devices in an open network, and is marked as being confidential, it may happen a leakage of such data item if one of the receiving devices transmit it to other devices without specifying the confidentiality requirement. Indeed, after several transmissions, it is difficult to identify the history of the data item or a modified version of such data item (also named a derived data item, as for example a slightly modified version of a picture in the case that the original data item is a picture). Therefore, there is a need to adopt a technique that can prevent such scenario, by enabling the tracking of data items in a network in which electronic devices involved in it have subscribed to this service. One solution could be to use some kind of watermarks associated with a data item, that can also integrate a history of the receiving and destination electronic devices. This approach is described for example in the article entitled: *"Using Watermarks to Prevent Leaks"* from the SANS Institute Reading Room. However, this technique requires a quite significant computational cost. Moreover, it drastically increases the size of the transmitted data.

The proposed technique provides an alternative that enables the tracking of data items in a network that is scalable and efficient.

### Summary of the disclosure

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure is directed to a method for providing information to determine a graph associated with a data item, said graph being representative of a history of said data item in a network, and said graph comprising a set of vertices and a set of edges, each vertex being associated with an electronic device of said network, and each edge linked at least two vertices being representative of a dataflow between said at least two vertices. The method is executed by an electronic device and is remarkable in that it comprises:
- verifying if an hash information derived from an obtained data item is comprised in a list of tracked data item comprising a list of hashes, each hash being a hash of a first information related to a data item;
- in the case that said hash information derived from said obtained data item is comprised in said list of tracked data item, transmitting in said network said information to determine a graph comprising a hash of a second information related to said obtained data item, when said obtained data item is obtained by said electronic device, and/or transmitted to another electronic device in said network and/or a derived data item from said obtained data item is generated.

In a preferred embodiment, the method for providing information is remarkable in that the list of tracked data item is comprised in at least one centralized server.

In a preferred embodiment, the method for providing information is remarkable in that each electronic device comprises said list of tracked data item.

In a preferred embodiment, the method for providing information is remarkable in that said transmitting further comprises a transmission of at least a first time information associated with said information to determine a graph.

In a preferred embodiment, the method for providing information is remarkable in that said transmitting further comprises a transmission of identifying elements of said electronic device and/or said another electronic device in said network.

In a preferred embodiment, the method for providing information is remarkable in that said first information related to a data item is a title of said data item.

In a preferred embodiment, the method for providing information is remarkable in that said first information related to a data item is binary information.

In a preferred embodiment, the method for providing information is remarkable in that, in the case that said hash information derived from said obtained data item is not comprised in said list of tracked data item, it further comprises tracking said obtained data item by adding to said list of tracked data item a hash of a first information related to said obtained data item.

In a preferred embodiment, it is proposed a method for determining a graph associated with a data item, said graph being representative of a history of said data item and said graph comprising a set of vertices and a set of edges, each vertex being associated with an electronic device, and each edge linked at least two vertices being representative of a dataflow between said at least two vertices. The method is executed by an electronic device and is remarkable in that it comprises, for a tracked data item that has been at least one time obtained by said electronic device:
- obtaining a first graph from information comprising a hash of information related to said tracked data item received by an electronic device, and at least a first time information;
- obtaining a second graph from information comprising a hash of information related to said tracked data item transmitted to another electronic device, and at least a second time information; and
- merging into a merged graph said first and second graphs by taking into account said at least first and second time information for determining at least one edge of said merged graph.

In a preferred embodiment, the method for determining is remarkable in that merging further comprises an inference test in order to link at least two vertices.

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*)*,* for example a CD-ROM (which stands for *"Compact Disc - Read Only Memory"*) or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more sub-programs of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc.

It should also be noted that a step of obtaining an element/value in the present document can be viewed either as a step of reading such element/value in a memory unit of an electronic device or a step of receiving such element/value from another electronic device via communication means.

In another embodiment, it is proposed an electronic device for providing information to determine a graph associated with a data item, said graph being representative of a history of said data item in a network, and said graph comprising a set of vertices and a set of edges, each vertex being associated with an electronic device of said network, and each edge linked at least two vertices being representative of a dataflow between said at least two vertices. The electronic device for providing information is remarkable in that it comprises:
- a module configured to verify if an hash information derived from an obtained data item is comprised in a list of tracked data item comprising a list of hashes, each hash being a hash of a first information related to a data item;
- a module configured to transmit in said network said information to determine a graph comprising a hash of a second information related to said obtained data item, when said obtained data item is obtained by said electronic device, and/or transmitted to another electronic device in said network and/or a derived data item from said obtained data item is generated, said module configured to transmit being activated in the case that said hash information derived from said obtained data item is comprised in said list of tracked data item.

In a preferred embodiment, the electronic device is remarkable in that said module configured to transmit is also configured to transmit at least a first time information associated with said information to determine a graph.

In a preferred embodiment, the electronic device is remarkable in that said module configured to transmit is also configured to transmit identifying elements of said electronic device and/or said another electronic device in said network.

In another embodiment, it is proposed an electronic device for determining a graph associated with a data item, said graph being representative of a history of said data item and said graph comprising a set of vertices and a set of edges, each vertex being associated with an electronic device, and each edge linked at least two vertices being representative of a dataflow between said at least two vertices. The electronic device for determining a graph is remarkable in that it comprises, for a tracked data item that has been at least one time obtained by said electronic device:
- a module configured to obtain a first graph from information comprising a hash of information related to said tracked data item received by an electronic device, and at least a first time information;
- a module configured to obtain a second graph from information comprising a hash of information related to said tracked data item transmitted to another electronic device, and at least a second time information; and
- a module configured to merge into a merged graph said first and second graphs by taking into account said at least first and second time information for determining at least one edge of said merged graph.

### Brief description of the drawings

The above and other aspects of the disclosure will become more apparent by the following detailed description of exemplary embodiments thereof with reference to the attached drawings in which:
- Figure 1 presents a network that implements at least some steps of a method for providing information to determine a graph associated with a data item, according to one embodiment of the present principles;
- Figure 2 presents a network that implements at least some steps of a method for providing information to determine a graph associated with a data item, according to one embodiment of the present principles;
- Figure 3 presents an example of a network that implements a method for providing information to determine a graph associated with a data item, according to another embodiment of the present principles;
- Figure 4 presents an example of a determination of a graph associated with a data item, according to one embodiment of the present principles;
- Figure 5 presents an example of a determination of a graph associated with a data item, according to another embodiment of the present principles;
- Figure 6 presents an example of a device that can be used to perform one or several steps of methods disclosed in the present document;
- Figure 7 presents a flowchart that comprises some steps of a method for providing information disclosed in the present document.

### Detailed description

The proposed technique enables the tracking of a data item in a communication network based on the use of a publish/subscribe communication pattern (that is an asynchronous communication pattern). The tracking of a data item signify that once a data item is considered to be tracked, it should be possible to know which are the electronic devices that have transmitted such data item, which are the electronic devices that have received such data item, and also which are the derived data item from the tracked data item (as well as the history of such derived data item by obtaining the identifying elements of the electronic devices that receive/transmit such derived data item).

The proposed technique relies on two logical communication channels (that are also named topics):
- **a global topic:** this channel is used to publish hashes of data items of interest. All the electronic devices in a network should subscribe to this channel, by which they are informed about data items to track;
- **a data topic per data item:** this channel is used to publish events related to tracked data item. Events can be of type IN, OUT and DERIVE that are defined as follows:
   o IN: data item received/obtained by an electronic device. The event includes the source and the destination of the data flow.
   o OUT: data item transmitted by an electronic device. The event includes the source and the destination of the data flow.
   o DERIVE: such event is used to inform electronic devices that a derived data item has been created. For example, this event includes the topic identifier of the derived data item.

An electronic device in a communication network can perform the following actions:
- subscribe to the global topic;
- subscribe to the data topic of the data items the electronic device is interested in;
- subscribe to the data topic of any data items derived from data items the electronic device is interested in (i.e. the electronic device is interested in derived data items for data items it is interested in);
- locally store data identifiers published on the global topic (ideally as a local, anonymous and compact lookup table (e.g. using bloom filters));
- locally store all events related to data items that the electronic device is interested in;
- publish data item identifiers on the global topic the electronic device is interested in;
- publish events (IN, OUT, DERIVE) related to any data item of interest (the electronic device itself may not be interested in these data items).

Using all data item events, an electronic device can determine a direct graph G = (V,E) for a data item the electronic device is interested in. In such graph, an electronic device in the network is represented by a vertex, and an edge e_{1,2} = (V₁,V₂) between two vertices V₁ and V₂ represents a dataflow from V₁ to V₂. The edge e_{1,2} may have the following attributes:
- The time the data item leaves V₁
- The time the data item arrives at V₂
- The hash of the data item (useful if we also track derived data).

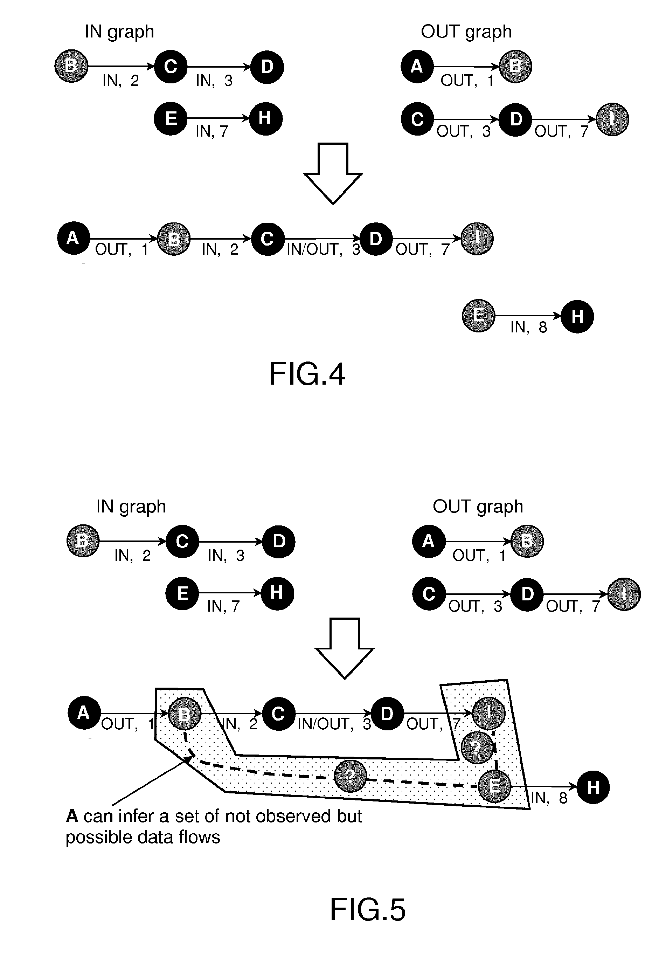

Details of the determination of such graph are given in the description of Figures 4 and 5.

In the following the following terms are used:
- an electronic device is interested in data item d if the electronic device would like to be able to reconstruct the data item history. Similarly, an electronic device can express its interest for a data item. In general it is up to the end-user to specify the data items he is interested in (i.e. the data items the user of an electronic device would like to be able to reconstruct the data item history);
- a data item of interest is a data item for which at least one electronic device (via a user of an electronic device) expressed its interest.

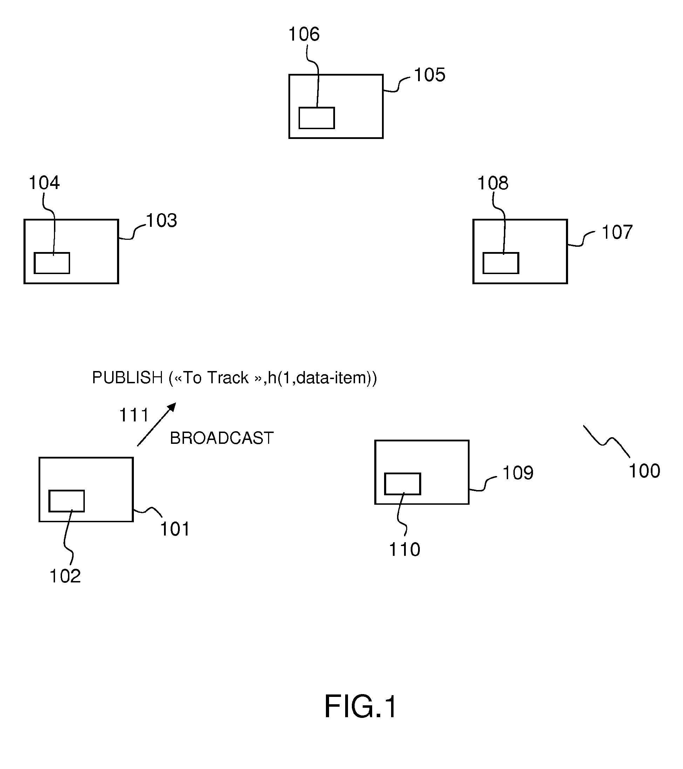

Figure 1 presents a communication network that implements at least some steps of a method for providing information to determine a graph associated with a data item, according to one embodiment of the present principles.

One embodiment of the present principles proposes a topic-based publish/subscribe communication pattern to track data items of interest. The embodiment relies on the following publish-subscribe topics:
- **Global topic:** We use a topic with a predefined and fixed identifier (we use the topic identifier 'toTrack' in the following). The topic publishes data item identifiers of data items of interest. The data item identifiers published on the toTrack topic are constructed such that their knowledge does not allow deriving the per data item topic identifiers (next paragraph), e.g. h(1,data item) where h() is a hash function.
- **Data topic:** The topic identifier is derived from the data itself, e.g. h(2,data item) where h() is a hash function.

It should be noted that the communication network, referenced 100, comprises several electronic devices, referenced 101, 103, 105 107 and 109, and each of the electronic devices comprises a memory unit, referenced 102, 104, 106, 108 and 110, or have access to electronic devices that have memory units in order to store a data such as a list for example.

In such embodiment of the present principles, when an electronic device, such as the electronic device 101, is interested in a data item (in order to track a data item that is going to be sent to the electronic device 103 for example), it publishes, in a step referenced 111, on a global channel (by broadcasting means): publish('toTrack', "dataHash=h(1,data)") where h() is a hash function (as the SHA-3) and ',' denotes a concatenation. Other hash functions can also be used, such as perceptual hash functions (e.g. audio or video fingerprints) in the case of audio or video contents. Some examples of that kind of hash functions are presented in the document *"*Implementation and Benchmarking of Perceptual Image Hash Functions" by Christoph Zauner. In one embodiment, the hash functions used for the global topic and the data topic should be different or use a different key or salt.

All the electronic devices that are in that network are subscribers of subscribe('toTrack', *), where the symbol * signifies whatever character. Therefore, the electronic devices 103, 105, 107 and 109 receive the information publish('toTrack', "dataHash=h(1,data item)") broadcasted by the electronic device 101 in the step 111.

Each electronic devices stores (e.g. using a local database) at least the element "dataHash" that have been broadcasted in a step 111. Therefore, in the case that several data items are tracked, electronic devices store list of dataHashes published on the global channel. For efficiency reasons compact lookup tables e.g. bloom filters can be used as a local database.

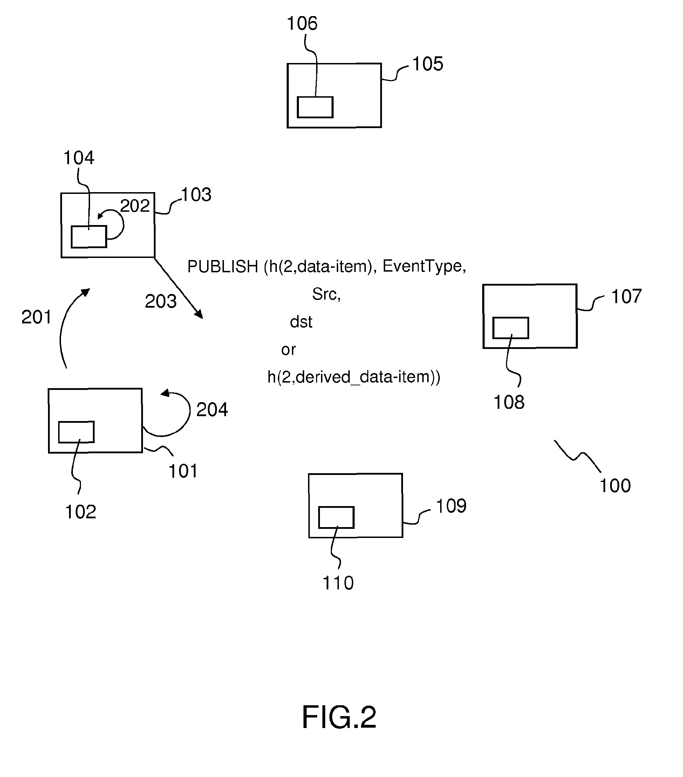

Figure 2 presents a communication network that implements at least some steps of a method for providing information to determine a graph associated with a data item, according to one embodiment of the present principles.

More precisely, after having published the information signifying that a data item is to be tracked (see Figure 1), the electronic device 101 transmits to the electronic device 203, in a step referenced 201, via an email attachment for example, the now tracked data item. Then, in a step referenced 202, the electronic device 103 verifies if the received data item is a tracked data item. In order to do so, it determines h(1, received data item), and verifies that the determined value h(1, received data item) is comprised in a list stored in the electronic device 103. In the case that the value of h(1, received data item) is comprised in the list stored in a memory unit 104, it means that the received data item is a tracked data item. Otherwise, it is not a tracked data item for the moment.

The electronic device 101 that is interested in data item data subscribes to the dedicated topic h(2,data item) (i.e. the electronic device 101 calls subscribe(h(2,data),*)). The electronic device 101 also subscribes to any derived data item (the identities of those data items are published on the h(2,data) topic/channel). The electronic device locally stores all events related to the data item.

Then, the electronic device 103 publishes data item events (data item inputs and outputs) on this topic identifier. More precisely, in that case, it publishes, in a step referenced 203, publish(h(2,data item), "EventType=IN, src=101, dst=103").

More generally, an electronic device referenced A publishes events for data items of interest as follows (the electronic device itself may not be interested in all or any of the data items):
- EventType = OUT: When the electronic device A sends a data item data to B (where B is an electronic device), the electronic device A publishes publish(h(2,data), "EventType=OUT, src=A, dst=B"). In one embodiment, data that is hashed corresponds to a title of the data item. In another embodiment, it is a binary information (i.e a binary file), or the file itself.
- EventType = IN: When the electronic device A receives a data item data from the electronic device B, the electronic device A publishes publish(h(2,data), "EventType =IN, src=B, dst=A").
- EventType = DERIVE: When the electronic device creates some derived data it publishes publish(h(2, deriveddata), "EventType=DERIVE, src=A, dataHash=h(2,deriveddata)") as well as publish('toTrack', dataHash= h(1, deriveddata))

It should be noted that the identifying elements A and B may be IP addresses or machine names.

It should be noted that only electronic devices that have at least one time obtained the data item data can subscribe and publish to this topic.

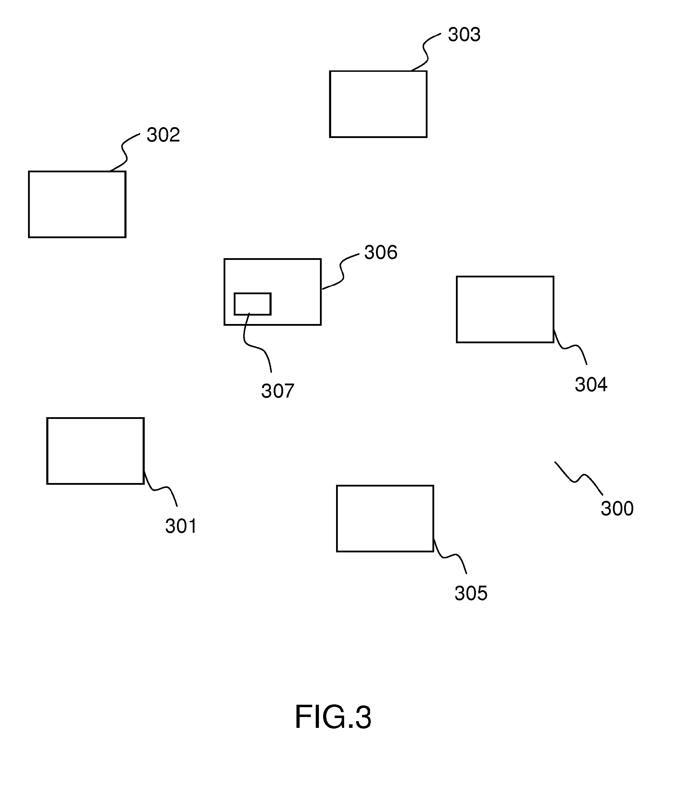

Figure 3 presents an example of a network that implements a method for providing information to determine a graph associated with a data item, according to another embodiment of the present principles.

In such embodiment, electronic devices referenced 301 to 305 are comprised in a network referenced 300, and a centralized list of tracked items, referenced 307, is stored on a unique electronic device (a kind of server) referenced 306, comprised in the network 300. The list of tracked items 307 stores the hashes of tracked data items. For efficiency reasons compact lookup tables e.g. bloom filters can be used as a local database. Electronic devices can request the list of tracked data items and store (e.g. using a local database) at least the data items hashes. In a variant, the list 307 is split and handled by two electronic devices (i.e. two servers).

The present technique can be implemented via the use of the XMPP (Extensible Messaging and Presence Protocol) protocol extension that can handle generic publish-subscribe functionality, or via the use of the Data Distribution Service standard (see for example the article *"*OMG Data Distribution Service: Real-Time Publish/Subscribe Becomes a Standard" by Gerardo Pardo-Castellote, published in January 2005, or via the use of the protocol Scribe as mentioned in the article : *"*SCRIBE: A large-scale and decentralized publish-subscribe infrastructure" by Miguel Castro et al., published in 2002, or via whatever publish/subscribe protocol.

Figure 4 presents an example of a determination of a graph associated with a data item, according to one embodiment of the present principles.

Using all data item events, an electronic device can rebuild the graph G = (V,E) for a data item the electronic device is interested in as follows:
I) For each hash value dataHash (including derived data items), create one graph G_{dataHash}^{IN} = (V_{dataHash}^{IN},E_{dataHash}^{IN}) with all IN events and another graph with all G_{dataHash}^{OUT} = (V_{dataHash}^{OUT},E_{dataHash}^{OUT}) OUT events.
   A graph is created as follows. For each event: i) create a vertex of src address if it does not exist. ii) create a vertex of dst address if it does not exist. iii) create a directed edge (src, dst, t, dataHash) from src to dst with attribute t = 'time of event', and attribute dataHash = 'topic identifier'.
II) Merge every two graphs G_{dataHash}^{OUT} and G_{dataHash}^{IN} and generate G_{dataHash} = (V_{dataHash},E_{dataHash}) as follows.
   - Merge the vertices of both graphs:V_{dataHash} = V_{dataHash}^{IN} U V_{dataHash}^{OUT}
   - Create edges as follows:
      For all edges (A,B,t^{OUT},dataHash) in E_{dataHash}^{OUT}:
         If there is an edge (A,B,t^{IN},dataHash) in E_{dataHash}^{IN} with t^{IN} > t^{OUT}, create an edge (A,B,t^{OUT},t^{IN},dataHash). If several edges (A,B,t^{IN},dataHash) exist, take the one with the smallest t^{IN} (still t^{IN} > t^{OUT} must hold). Remove (A,B,t^{IN},dataHash) from E_{dataHash}^{IN}.
         Else create edge (A,B,t^{OUT},dataHash).
      For all remaining edges in E_{dataHash}^{IN}. add them to E_{dataHash}.
III) Merge all G_{dataHashes}
   - Merge the vertices of both graphs: V = U V_{dataHashes}
   - Merge the vertices of both graphs: E = U E_{dataHashes}

In the Figure 4, the numbers noted on the edges correspond to a number linked to a time related to an event (1 corresponding to the oldest event, and 8 corresponding to the most recent event).

Figure 5 presents an example of a determination of a graph associated with a data item, according to another embodiment of the present principles.

Using the above algorithm an electronic device can infer the set of not observed (i.e. not in the reconstructed graph) but possible data flows, represented as a graph G_{Infer}=(V_{Infer},E_{Infer}). V_{Infer} = {set of all electronic devices of V}. E_{Infer} = {(Vᵢ,Vⱼ) | there exist an edge (*,Vᵢ) or (Vᵢ,*) in G with tᵢₙ or tout < tᵢₙ or tout of edges (*,Vⱼ) or (Vⱼ,*) in G}.

An example is depicted in the figure 5.

The graph representation used in this disclosure may be adapted such that several devices are represented by one vertex. For instance, instead of using the exact IP address as the name of the vertex, we may use its subnet. For example, if we have the source and destination addresses X.1 = 141.11.140.33 and X.1 = 141.11.140.90 we can merge them as a single vertex 141.11.140.*. Doing, so we can implement heuristics that approximate data flows that the electronic devices cannot see.

It should be noted that the inference performed during the determination of a graph associated with a data item takes into account all the possible events that weren't observated/detected by the electronic device that reconstructs the graph.

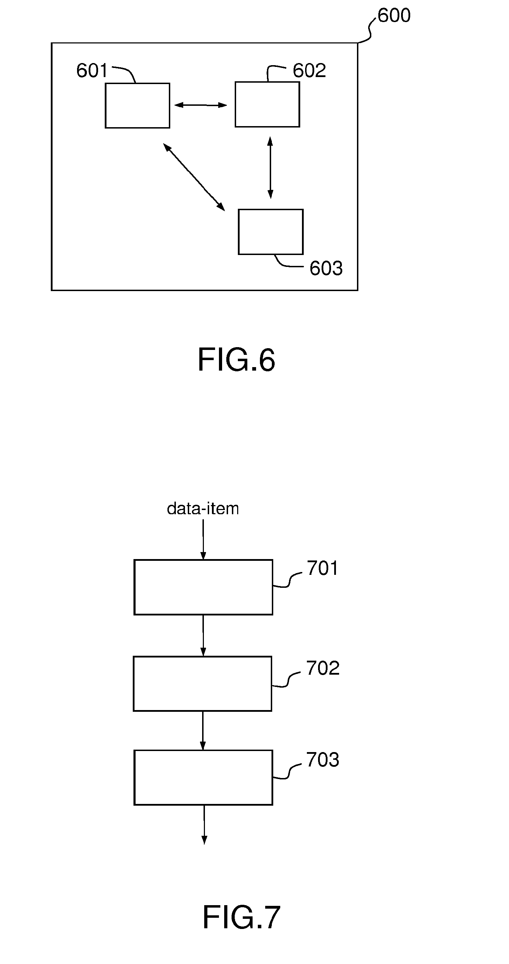

Figure 6 presents an example of a device that can be used to perform one or several steps of methods disclosed in the present document.

Such device referenced 600 comprises a computing unit (for example a CPU, for *"Central Processing Unit"),* referenced 601, and one or more memory units (for example a RAM (for *"Random Access Memory"*) block in which intermediate results can be stored temporarily during the execution of instructions a computer program, or a ROM block in which, among other things, computer programs are stored, or an EEPROM ("*Electrically-Erasable Programmable Read-Only Memory")* block, or a flash block) referenced 602. Computer programs are made of instructions that can be executed by the computing unit. Such device 600 can also comprise a dedicated unit, referenced 603, constituting an input-output interface to allow the device 600 to communicate with other devices. In particular, this dedicated unit 603 can be connected with an antenna (in order to perform communication without contacts), or with serial ports (to carry communications via "physical contacts"). It should be noted that the arrows in Figure 6 signify that the linked unit can exchange data through buses for example together.

In an alternative embodiment, some or all of the steps of the method previously described, can be implemented in hardware in a programmable FPGA *("Field Programmable Gate Array")* component or ASIC *("Application-Specific Integrated Circuit")* component.

In an alternative embodiment, some or all of the steps of the method previously described, can be executed on an electronic device comprising memory units and processing units as the one disclosed in the Figure 6.

Figure 7 presents a flowchart that comprises some steps of a method for providing information disclosed in the present document.

In a step referenced 701, an electronic device according to an embodiment of the invention, obtains a data item (for example by receiving it from an email in the case that the data item is a file enclosed in that email).

Then, in a step referenced 702, the electronic device verifies if an hash information derived from the obtained data item is comprised in a list of tracked data item comprising a list of hashes, each hash being a hash of a first information related to a data item. For example, the electronic device determines the hash of the concatenation of the binary file which was enclosed in the email, and an additional value (for example 1). Then, it checks if this hash value (i.e. h(1,file)) is comprised in the list of tracked data item.

In the case that the hash information derived from said obtained data item (i.e. h(1,file)) is comprised in the list of tracked data item, the electronic device transmits or broadcasts in the network, in a step referenced 703, information to determine a graph that comprises a hash of a second information related to the obtained data item, when the obtained data item is obtained by the electronic device (for example this information to determine a graph can comprise publish(h(2,data item), "EventType=IN, src=101,dst = 103"), and/or transmitted to another electronic device in the network (for example this information to determine a graph can comprise publish(h(2,data item), "EventType=OUT, src = 103, dst =105") and/or a derived data item from the obtained data item is generated.

## Claims

1. A method for providing information to determine a graph associated with a data item, said graph being representative of a history of said data item in a network, and said graph comprising a set of vertices and a set of edges, each vertex being associated with an electronic device of said network, and each edge linked at least two vertices being representative of a dataflow between said at least two vertices, said method being executed by an electronic device and being **characterized in that** it comprises:
- verifying if an hash information derived from an obtained data item is comprised in a list of tracked data item comprising a list of hashes, each hash being a hash of a first information related to a data item;
- in the case that said hash information derived from said obtained data item is comprised in said list of tracked data item, transmitting in said network said information to determine a graph comprising a hash of a second information related to said obtained data item, when said obtained data item is obtained by said electronic device, and/or transmitted to another electronic device in said network and/or a derived data item from said obtained data item is generated.

2. The method for providing information according to claim 1, **characterized in that** said list of tracked data item is comprised in at least one centralized server.

3. The method for providing information according to claim 1, **characterized in that** each electronic device comprises said list of tracked data item.

4. The method for providing information according to any claims 1 to 3, **characterized in that** said transmitting further comprises a transmission of at least a first time information associated with said information to determine a graph.

5. The method for providing information according to any claims 1 to 4, **characterized in that** said transmitting further comprises a transmission of identifying elements of said electronic device and/or said another electronic device in said network.

6. The method for providing information according to any claims 1 to 5, **characterized in that** said first information related to a data item is a title of said data item.

7. The method for providing information according to any claims 1 to 5, **characterized in that** said first information related to a data item is binary information.

8. The method for providing information according to any claims 1 to 7, **characterized in that**, in the case that said hash information derived from said obtained data item is not comprised in said list of tracked data item, it further comprises tracking said obtained data item by adding to said list of tracked data item a hash of a first information related to said obtained data item.

9. A method for determining a graph associated with a data item, said graph being representative of a history of said data item and said graph comprising a set of vertices and a set of edges, each vertex being associated with an electronic device, and each edge linked at least two vertices being representative of a dataflow between said at least two vertices, said method being executed by an electronic device and **characterized in that** it comprises, for a tracked data item that has been at least one time obtained by said electronic device:
- obtaining a first graph from information comprising a hash of information related to said tracked data item received by an electronic device, and at least a first time information;
- obtaining a second graph from information comprising a hash of information related to said tracked data item transmitted to another electronic device, and at least a second time information; and
- merging into a merged graph said first and second graphs by taking into account said at least first and second time information for determining at least one edge of said merged graph.

10. The method for determining according to claim 9, **characterized in that** merging further comprises an inference test in order to link at least two vertices.

11. A computer-readable and non-transient storage medium storing a computer program comprising a set of computer-executable instructions, which when executed, configure the computer to perform the computer to perform a method according to any of claims 1 to 8, and/or to perform a method according to claims 9 to 10.

12. An electronic device for providing information to determine a graph associated with a data item, said graph being representative of a history of said data item in a network, and said graph comprising a set of vertices and a set of edges, each vertex being associated with an electronic device of said network, and each edge linked at least two vertices being representative of a dataflow between said at least two vertices, said electronic device for providing information being **characterized in that** it comprises:
- a module configured to verify if an hash information derived from an obtained data item is comprised in a list of tracked data item comprising a list of hashes, each hash being a hash of a first information related to a data item;
- a module configured to transmit in said network said information to determine a graph comprising a hash of a second information related to said obtained data item, when said obtained data item is obtained by said electronic device, and/or transmitted to another electronic device in said network and/or a derived data item from said obtained data item is generated, said module configured to transmit being activated in the case that said hash information derived from said obtained data item is comprised in said list of tracked data item.

13. The electronic device according to claim 12, **characterized in that** said module configured to transmit is also configured to transmit at least a first time information associated with said information to determine a graph.

14. The electronic device according to any claims 12 to 13, **characterized in that** said module configured to transmit is also configured to transmit identifying elements of said electronic device and/or said another electronic device in said network.

15. An electronic device for determining a graph associated with a data item, said graph being representative of a history of said data item and said graph comprising a set of vertices and a set of edges, each vertex being associated with an electronic device, and each edge linked at least two vertices being representative of a dataflow between said at least two vertices, said electronic device for determining a graph being **characterized in that** it comprises, for a tracked data item that has been at least one time obtained by said electronic device:
- a module configured to obtain a first graph from information comprising a hash of information related to said tracked data item received by an electronic device, and at least a first time information;
- a module configured to obtain a second graph from information comprising a hash of information related to said tracked data item transmitted to another electronic device, and at least a second time information; and
- a module configured to merge into a merged graph said first and second graphs by taking into account said at least first and second time information for determining at least one edge of said merged graph.
